# EUROPEAN PATENT APPLICATION

(11) **EP 2 312 577 A1**
(43) Date of publication of application: **20.04.2011**
(21) Application number: 09290750.0
(22) Date of filing: 30.09.2009
(51) Int. Cl.: G10L 15/18, H04N 7/24, H04N 5/00

(54) **Enrich sporting events on radio with a symbolic representation customizable by the end-user**

(71) Applicant: Alcatel Lucent, 75008 Paris (FR)
(72) Inventor: Obled, Corinne, 91620 Nozay (FR); Delegue, Gérard, 91620 Nozay (FR); Andrieu, Xavier, 91620 Nozay (FR)
(74) Representative: Hedarchet, Stéphane

(57) **Abstract**

The present invention describes a method for a digital radio device to display a symbolic representation of events during an audio stream, in which:
• The digital radio device analyzes in real-time the events during an audio stream,
• The digital radio device displays a symbolic representation of events depending on the audio analysis,
• the richness of symbolic representation of events to be displayed depending to the digital radio device screen size.

## Description

Following sport events on radio is not always easy for listeners because of the lack of videos. The new standards for digital radio allow associating synchronized interactive services to audio streams.

These services will enhance the contents broadcasted.

However due to the limited bandwidth allocated to interactive streams, the small size of the digital radio devices screens and the access rights to be paid to videos broadcast operators, it is not possible to enrich audio contents with videos.

A problem solved by the present invention is to provide customizable additional information describing sporting events in real time with a limited bandwidth and adapted to the resolution of radio screen.

The present invention describes a method for a digital radio device to display a symbolic representation of events during an audio stream, in which:
- The digital radio device analyzes in real-time the events during an audio stream,
- The digital radio device displays a symbolic representation of events depending on the audio analysis,
- the richness of symbolic representation of events to be displayed depending to the digital radio device screen size.

The digital radio devices are part of a network as GSM network, DCS (Digital Communication System), UMTS (Universal Mobile Telecommunications System) or GPRS (General Packet Radio Service en anglais) networks.

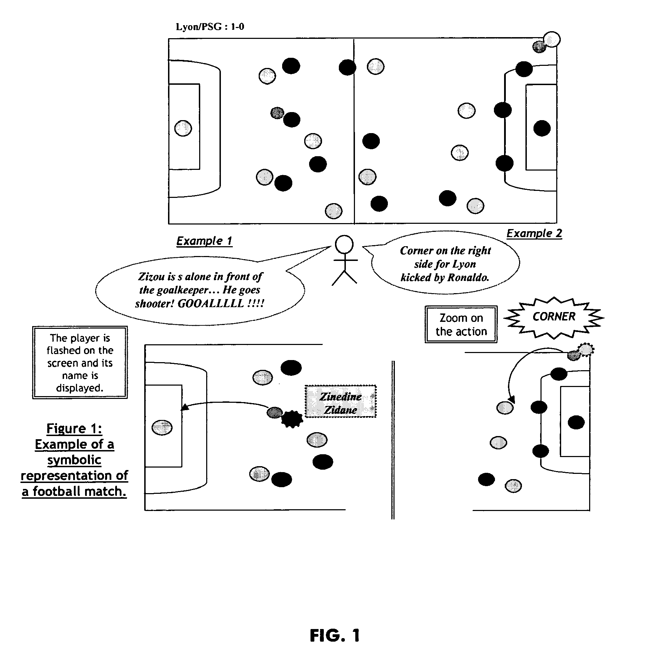

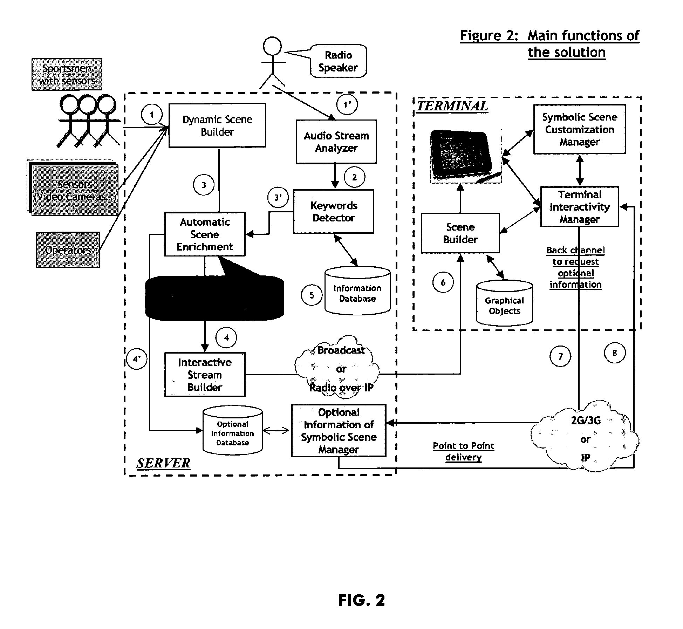

Figure 1 describes an eample of the Graphical User Interface (GUI) of a symbolic representation of a football match; Figure 2 descruibes the main functions of the invention.
- The Dynamic Scene Builder is in charge to build in real-time the symbolic representations of the sporting events. It collects information from sensors (video cameras at 360 degrees, movement and position sensors, accelerometers...) and additional information from operators. Videos are analyzed and segmented to extract relevant information (footballer players, balloon, cars, horses...). A scene modeling is generated. This model describes:
   - The position of actors with their name.
   - The events associated to the sporting event (goal, corner...).
- In real-time, the Audio Stream Analyzer analyzes the audio stream and transcripts the speech to text in order to find relevant information to enrich the symbolic representation.
- In the Information Database, for each kind of sports, keywords or expressions specific to each of them can be defined. For example for a football match:
   - Football players name.
   - Goal.
   - Foul.
   - Penalty area.
   - Corner.
   - Red card.
   - Injury time
- The Keywords Detector verifies if the transcription matches some keywords or expressions of the database. This function will be able to find and associate relatives or synonymous expressions with those recorded in the database. For example if the recorded expression in the database is "Zinedine Zidane" the feature will associate "Zidane" "Zinedine", "Zlzou", "Zidane Zinedine" or "Zinedine Zidane" to the recorded expression.
- The Automatic Scene Enrichment receives the scene built by the Dynamic Scene Builder. This module is able for each kind of sporting event to determine what are the mandatory information to transmit to the Interactive Stream builder and what are the optional ones to record in the database Optional Information database.

The optional information will be available on end-user demand. Examples of mandatory information:
- for a football match, one mandatory information is the balloon position.
- for a bike race, one mandatory information is the position of the front runner

The Automatic Scene Enrichment also receives information from the Keywords Detector. If a keyword or expression has been detected in the audio stream, depending on the type of sporting event and according to the keyword or expression detected, the system will be able to associate to it a specific action to enrich the symbolic representation with relevant information for the end-user. For example for a football match (cf. on figure 1, the examples 1 & 2):
1 - If the radio speaker talks about Zinedine Zidane (whose name is recorded in the database):
   o Its representation will flash on the screen
   o and its name is displayed on the screen.
2 - If the speaker says keywords such GOAL, CORNER... :
   o The application zooms on this sport event
and a piece of information is displayed on the screen to inform the end-user of what happens.
- The Interactive Stream Builder builds the interactive stream to broadcast on the digital radio. Different technologies can be used to represent, deliver and rend interactive services (MPEG4/BIFS, MPEG4/LASER...). Interactivity will allow, for example, the end-user to select an object of the symbolic representation to get more information about (the name of the football player, statistics...).
- The Optional Information of Symbolic Scene Manager receives a request from the terminal to customize the symbolic representation with, for example, additional information on a specific football player,... These additional data's are personal and sent (via 2G/3G or IP network) only to the end-user who requests this optional information.
- The terminal have a back-channel and via the Terminal Interactivity Manager, the end-user can send a request (via 2G/3G or IP network) to receive optional/additional information in order to customize its symbolic representation.
- To build the scene on the terminal, the Scene Builder receives the interactive stream built on the server side and, with the graphical objects initialized in the database, generates the symbolic representation of the sporting event. This symbolic scene is the same for each user. But via the Symbolic Scene Customization Manager, the user has the possibility to customize this main symbolic scene with optional/additional information.
- The Terminal Interactivity Manager treats the interactivity events to display the relevant information associated to them (name of a football player, statistics...).
- On the digital radio, the end-user could customize the symbolic scene via the Symbolic Scene Customization Manager. For example he could register his profile:
   - Favorite sports.
   - Favorite teams.
   - Favorite players.

He could for a specific sporting event choose:
- The color of its favorite team.
- A specific color for its favorite players.

Then a request is sent to the server side to receive the optional/additional information to customize the symbolic scene. Additional data's are sent to the Scene Builder" to update the symbolic scene on the terminal.

## Claims

1. A method for a digital radio device to display a symbolic representation of events during an audio stream, in which:
• The digital radio device analyzes in real-time the events during an audio stream,
• The digital radio device displays a symbolic representation of events depending on the audio analysis,
• the richness of symbolic representation of events to be displayed depending to the digital radio device screen size
